# EUROPEAN PATENT APPLICATION

(11) **EP 4 502 453 A1**
(43) Date of publication of application: **05.02.2025**
(21) Application number: 24174987.8
(22) Date of filing: 08.05.2024
(51) Int. Cl.: F17C 13/04

(54) **MULTIFUNCTION VALVE WITH ELECTROMAGNETICALLY OPERATED SHUT-OFF VALVE FOR HIGH-PRESSURE HYDROGEN**

(30) Priority: 04.08.2023 IT 202300016728
(71) Applicant: OMB Saleri S.p.A. - Societa' Benefit, 25126 Brescia (IT)
(72) Inventor: BERARDI, Mario, I-25126 BRESCIA (IT); MONDINELLI, Francesco, I-25126 BRESCIA (IT); SANTULLI, Renato, I-25126 BRESCIA (IT)
(74) Representative: Pulieri, Gianluca Antonio

(57) **Abstract**

A multifunction valve (4) for managing a hydrogen flow in a fuel cell motor vehicle system comprises an electromagnetically operated shut-off valve (100) having a shutter seat (113) and a shutter (130a). The shutter (130a) comprises a first sealing portion (133) made of a first shutter material and a second sealing portion (137) made of a second shutter material, intended to come into contact with the shutter seat (113) to implement a hydrogen seal. The first shutter material is harder than the second shutter material and less hard than the seat material and, at least under one usage condition, the first sealing portion (133) and the second sealing portion (137) of the shutter (130a) are simultaneously in contact with the shutter seat (113) in order to implement the hydrogen seal.

## Description

### Technical field

The obj ect of the present invention is an electromagnetic shut-off valve (SOV valve), usually intended to equip a multifunction valve (OTV valve) for a high-pressure hydrogen tank of fuel cell motor vehicle systems, to allow or prevent the flow of hydrogen between the tank and the fuel cells.

### Prior art

In a fuel cell motor vehicle system, hydrogen is stored in a high-pressure tank, typically 700 or 350 bar. A multifunction valve is applied to the neck of the tank, which allows for the introduction of hydrogen into the tank (refilling function) and the release of hydrogen towards downstream user devices (defueling function). In particular, the delivery of hydrogen is regulated by an electrically controlled electromagnetic shut-off valve, often referred to as a "solenoid valve". For example, an SOV valve is described within the International Application WO-A1-2021/090139, in the name of the Applicant.

When the tank is full to capacity the pressure of the gas generally corresponds to the maximum pressure, for example 350 or 700 MPa. Under such conditions, in order to prevent gas leakage, the shut-off valve must ensure excellent gas tightness between the shutter and the seat thereof. On the other hand, when the tank is not at full capacity, the pressure is less than the maximum pressure and under certain usage conditions the pressure may have a value of a few tens of an MPa. Also, under these conditions the shut-off valve must obviously ensure a perfect seal between the shutter and the seat thereof.

The Applicant has however found that those shut-off valves that are known today on the market have some sealing problems, especially under usage conditions wherein the gas is found to be at low pressure, as in the case wherein the tank is almost empty, so much so as to force some manufacturers to resort to some additional processing or processes, which are often long and expensive, such as thermoforming, in order to ensure a seal between the shutter and the seat thereof under all working conditions.

### Object of the invention

The object of the present invention is to meet the needs of the industry and at the same time to overcome the drawbacks discussed above with reference to the prior art.

Said object is achieved by a shut-off valve according to claim 1. The dependent claims disclose further advantageous embodiments of the invention.

### Brief description of the figures

The features and the advantages of the shut-off valve according to the present invention will appear more clearly from the following description, made by way of an indicative and non-limiting example with reference to the drawings of the accompanying figures, wherein:
- Figure 1 shows a diagram of a fuel cell motor vehicle system;
- Figures 2a and 2b show a multifunction valve comprising a shut-off valve according to the present invention;
- Figure 3a is a sectional view of a shut-off valve according to the present invention, in a first working condition (closed valve and high-pressure gas);
- Figure 3b is an enlargement of the box IIIB in Figure 3a;
- Figure 4a is a sectional view of a shut-off valve according to the present invention, in a second working condition (closed valve and low-pressure gas);
- Figure 4b is an enlargement of the box IVB in Figure 4a;
- Figure 5a is a sectional view of a shut-off valve according to the present invention, in a third working condition (open valve);
- Figure 5b is an enlargement of the box VB of Figure 5a;
- Figure 6 is an enlargement of a sectional view of a shut-off valve according to a further embodiment of the present invention, in a first working condition (closed valve and high-pressure gas);
- Figure 7 is an enlargement of a sectional view of the shut-off valve according to Figure 6, in a first working condition (closed valve and high-pressure gas);
- Figure 8 is an enlargement of a sectional view of the shut-off valve according to Figure 6, in a third working condition (open valve).

### Detailed description of the invention

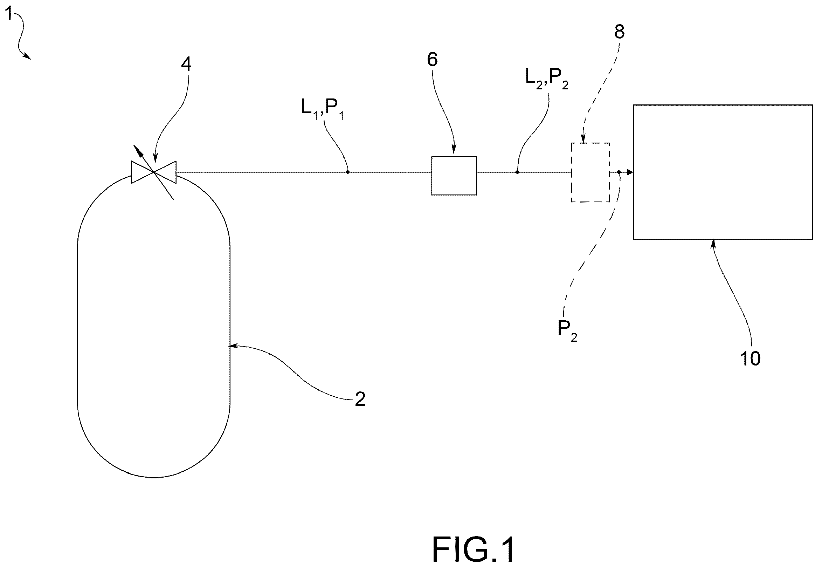

With reference to Figure 1, the numeral 1 has been used to collectively denote a fuel cell motor vehicle system comprising a tank 2 for containing high-pressure hydrogen (the maximum pressure may reach 350, 700, or even 1000 bar), a multifunction valve 4 (OTV valve) applied to a flange of the tank 2, a pressure-reducing valve 6 (HPR valve), a high pressure line L1 with high pressure P1, connecting the OTV valve 4 to the HPR valve 6, a fuel cell assembly 10, and a low pressure line L2 with low pressure P2, connecting the HPR valve 6 to the fuel cell assembly 10. Preferably, the system 1 comprises accessory valves 8 that intercept the low-pressure line L2.

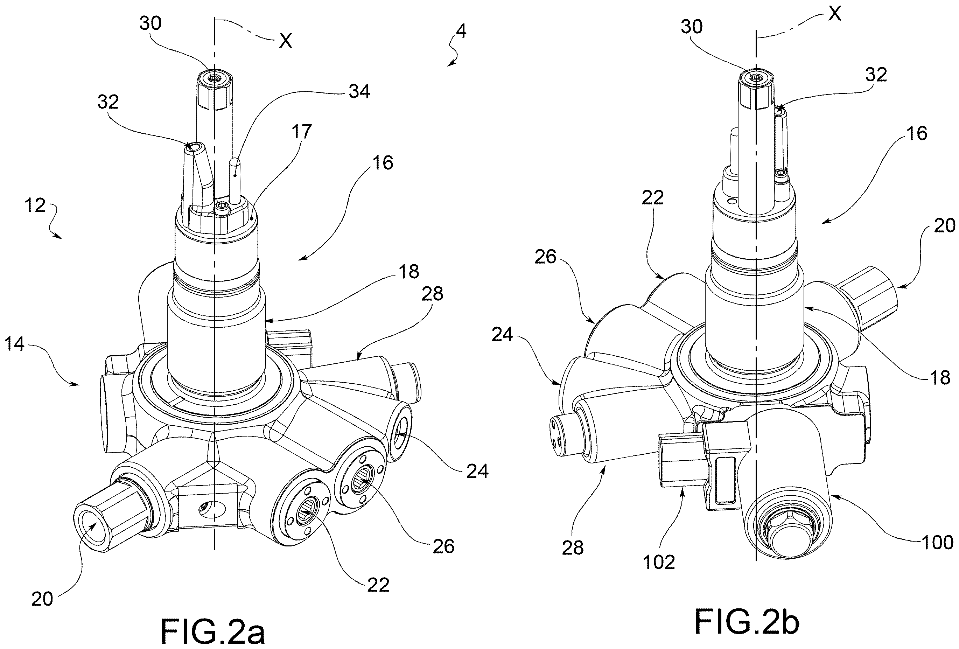

With reference to Figures 2a and 2b, the OTV valve 4 comprises a valve body 12, for example made in one piece, usually of aluminum, comprising a main portion 14 and a connection portion 16. The attachment portion 16 extends mainly along an attachment axis X and has a threaded engagement section 18 for screwing into the flange hole of the tank 2.

Preferably, the main portion 14 has the predominant extension thereof on an imaginary plane, orthogonal to the main axis X.

According to one embodiment, the main portion 14 provides an inlet/outlet conduit 20 for the inlet of hydrogen during the filling step and the outlet of hydrogen to the downstream devices during the defueling step, a first manually operated shut-off valve 22 (MV valve), a venting conduit 24, a second manually operated shut-off valve 26 (BV valve), a thermal safety device 28 (TPRD device), an inlet conduit 30, an outlet conduit 32, an electro-magnetically operated shut-off valve 100 (SOV valve) with a related electrical connector 102, and a temperature detection device 34 (T-sensor device).

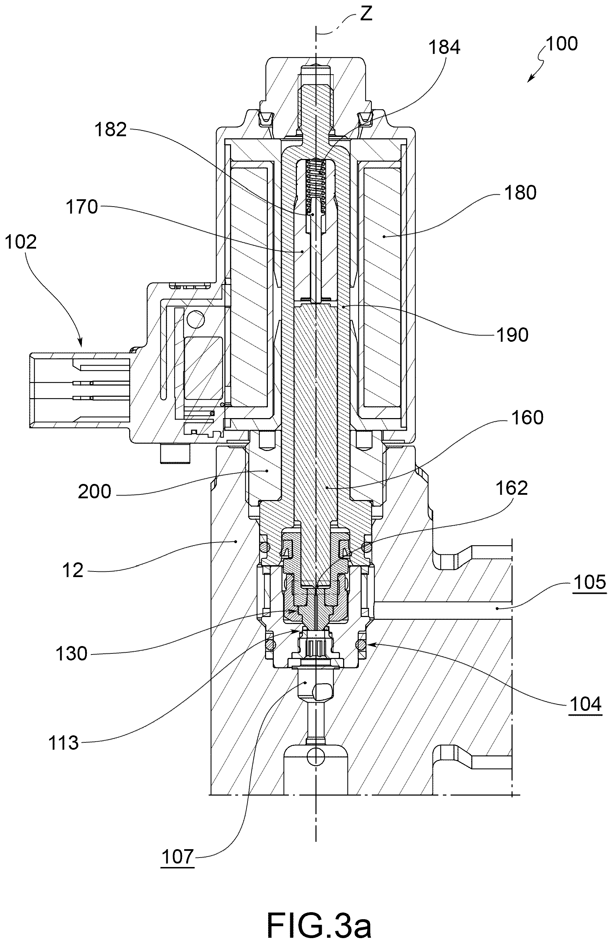

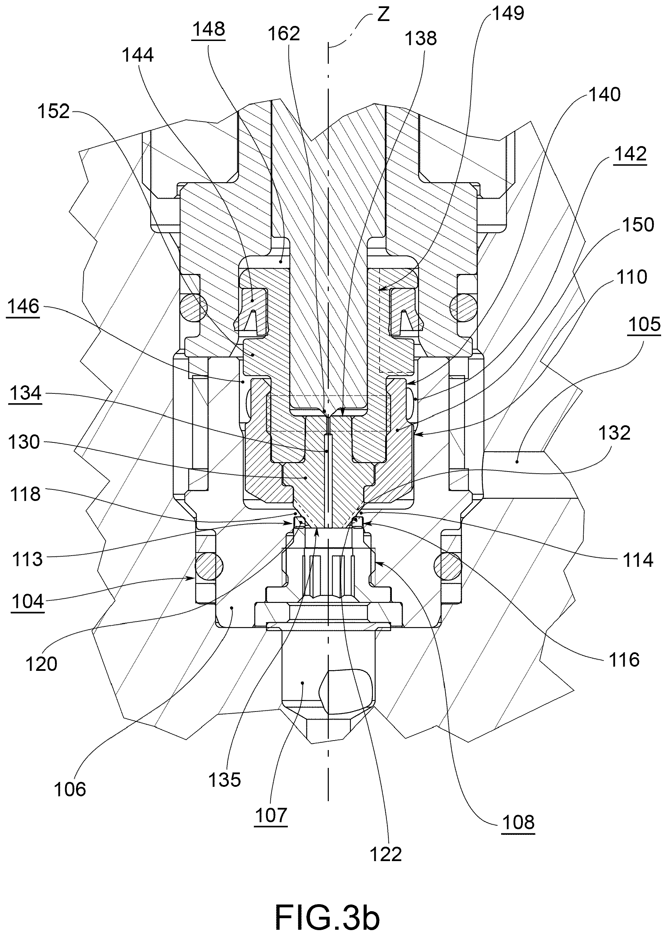

According to Figure 3a and 3b, the valve body 12 has a body compartment 104 for the application of the SOV valve 100; in the body compartment 104, preferably from the side surface thereof, an inlet channel 105 opens out in communication with the inlet duct 30 whereinto, during the defueling step, the gas loaded into the tank enters. Furthermore, from the body compartment 104, preferably from the bottom surface thereof, an outlet channel 107 runs in communication with the inlet/outlet duct 20 for supplying gas to the devices downstream of the OTV valve, during the defueling step.

Preferably, the SOV valve 100 comprises a fixed bush 106 located at the bottom of the body compartment 104, internally provided with a lower compartment 108, also referred to as a "low pressure compartment," in communication with the outlet channel 107, and an upper compartment 110, also referred to as a "high pressure compartment," in communication with the inlet channel 105.

The upper compartment and the lower compartment may be arranged in communication with each other through a shutter seat 113.

### First embodiment

According to a first embodiment of the invention (Figures 3a to 5b), the shutter seat 113 consists of an upper seat 114 and a lower seat 116, arranged adjacent to each other.

The upper seat 114 consists of a flared passage to the lower compartment 108, i.e. delimited by a frustoconical side surface converging toward the lower compartment 108, annularly delimited by an upper wall 118, e.g. in a single piece with the fixed bush 106; the upper wall 118 is made of a first material, e.g., a metal material, preferably steel.

The lower seat 116 consists of a central passage through a sealing ring 120, i.e. a passage annularly delimited by a lower wall 122 in a second material, e.g. a polymer material, e.g. PTFE.

The lower seat 116 is coaxial to the upper seat 114, and the lower wall 122 is arranged against the upper wall 118 on the side of the lower compartment 108.

The lower seat 116 makes a narrowing of the upper seat 114. In other words, the diameter of the hole of the sealing ring 120 is less than the minimum diameter of the passage of the upper seat 114.

The SOV valve 100 further comprises a shutter 130 adapted to cooperate with the shutter seat 113 in order to interrupt the fluidic communication between the lower compartment 108 and the upper compartment 110.

The shutter 130 is mainly located in the upper compartment 110 and is translatable along a main axis Z between an opening position, wherein it is disengaged from the shutter seat 113, so that the lower compartment 108 is in fluidic communication with the upper compartment 110 through said shutter seat 113, and a closing position, wherein it is engaged with the shutter seat 113.

The shutter 130 consists of an element, preferably in one piece, comprising a sealing portion 132 having a flared outer lateral surface, i.e. frustoconical towards the lower compartment 108. The sealing portion 132 is made of a shutter material, for example a polymer material, for example a thermoplastic material, for example PEEK (PolyEther Ether Ketone), PAI (Polyamide-Imide) or VESPEL.

The material of the upper wall 118 and the material of the lower wall 122 have different hardnesses.

For the determination of the hardness, reference is made to the various standard regulations, for example the ASTM D2240 standard for PET parts and the ASTM D-785 standard for VESPEL parts, considering, where necessary, an operating temperature of between -40°C and +85°C.

Preferably, the material of the upper wall is harder than the material of the lower wall. Preferably, moreover, the shutter material is harder than the less hard material between the material of the lower wall and the material of the upper wall. Preferably, finally, the shutter material is harder than the material of the lower wall and less hard than the material of the upper wall.

The shutter 130 is further provided with an axial shutter channel 134 that extends from a head surface 135 of the shutter 130, facing towards the lower compartment 108, to a tail surface 138, axially opposite the head surface 135.

Preferably, the shutter 130 is supported by a shutter holder 140, axially sealingly translatable to a shutter compartment 142.

For example, the shutter holder 140 carries a seal 144, such as a lip seal, adapted to implement a gas seal inside the shutter compartment 142, subdividing it into a lower region 146, in communication with the inlet channel 105 and closed by the shutter 130, and an upper region 148, at least partially delimited by said tail surface 138 of the shutter 130.

The lower region 146 is permanently in communication with the upper region 148 by means of a calibrated channel 149, having a much lesser passage cross-section than a passage cross-section of the shutter channel 134.

For example, the shutter holder 140 is in two parts: a first part 150, having a bottom axially crossed by the shutter 130 and wherefrom the sealing portion 132 protrudes axially below, and a second part 152, screwed into the first part 150 in order to block the shutter 130 and having a bottom crossed by the shutter protruding above with said tail surface 138.

For example, the calibrated channel 149 is formed through the second part 152.

The shut-off valve 100 further comprises a movable core 160 in the form of an elongated stem along the main axis Z; the movable core 160 has at the lower end a protrusion 162 suitable for closing the opening of the shutter channel 134 on the tail surface 138.

The shut-off valve 100 further comprises a fixed core 170, elastic thrust means suitable for permanently operating on the movable core 160 in order to push it into the advanced position wherein it closes the shutter channel 134, and an electrically powered winding 180. For example, the thrust means comprise a peg 182, in contact with the movable core 160, and an elastic element 184 having on one side a fixed backing part acting upon the peg 182 on the other side.

Preferably, the movable core 160, the fixed core 170 and the thrust means are contained within an inner casing 190, partially contained within the body compartment 104 in order to operate on the fixed bush 106 and keep it in position, and partially protruding from the valve body 2; the winding 180 is arranged about the protruding part.

The inner casing 190 is fixed in position by means of a mounting bush 200 screwed into the body compartment 104; the mounting bush 200 in turn supports the winding 180 and the electric connector 102.

In a first operating condition of the shut-off valve 100 (Figure 3a and 3b), the shut-off valve is in a closing configuration wherein the shutter 130 closes the shutter seat 113, the winding 180 is not electrically powered, the movable core 160 is distal from the fixed core 170, the thrust means push the movable core 160 against the shutter 130 such as to close the opening of the shutter channel 134 on the tail surface 138.

In such working condition, it is furthermore accepted that the gas tank is at maximum capacity or else almost full; the gas pressure in the tank is therefore high.

Consequently, the lower region 146 of the shutter compartment 142, which is in permanent communication with the inlet channel 105 coming from the tank, is in a high-pressure condition; moreover, the upper region 148 of the shutter compartment 142, which is in permanent communication with the lower compartment 146 via the calibrated channel 149, is also in a high-pressure condition.

In this condition, there is a very intense action, due to the high pressure, which pushes the shutter holder 140, and thus the shutter 130, against the shutter seat 113.

This action makes it possible to obtain an excellent seal of the shutter 130 with the shutter seat 113, insofar as a strong seal is achieved both between the sealing portion 132 and the upper seat 114, i.e., contact between the sealing portion 132 and the upper wall 118, and between the sealing portion 132 and the lower seat 116, i.e., contact between the sealing portion 132 and the lower wall 122.

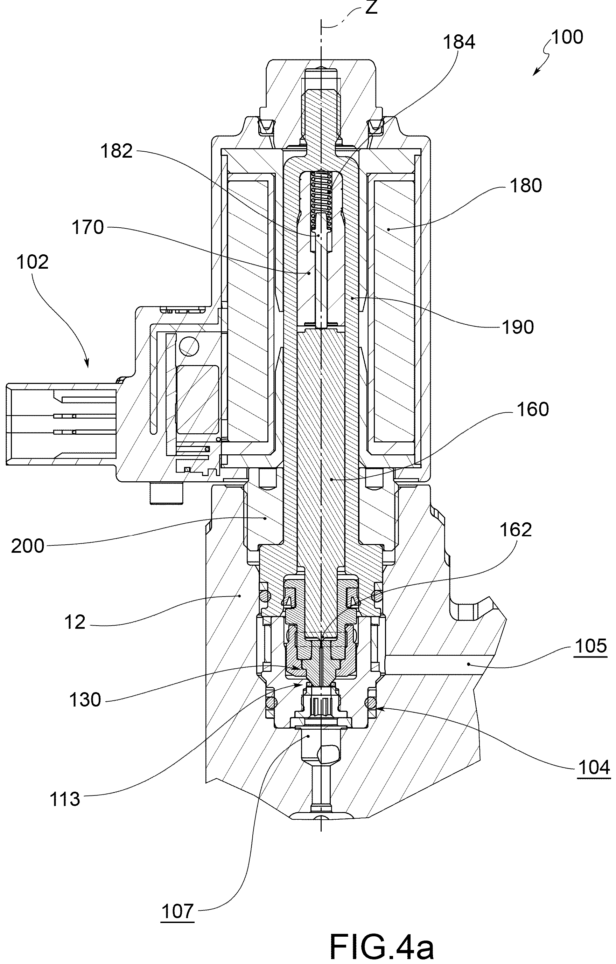

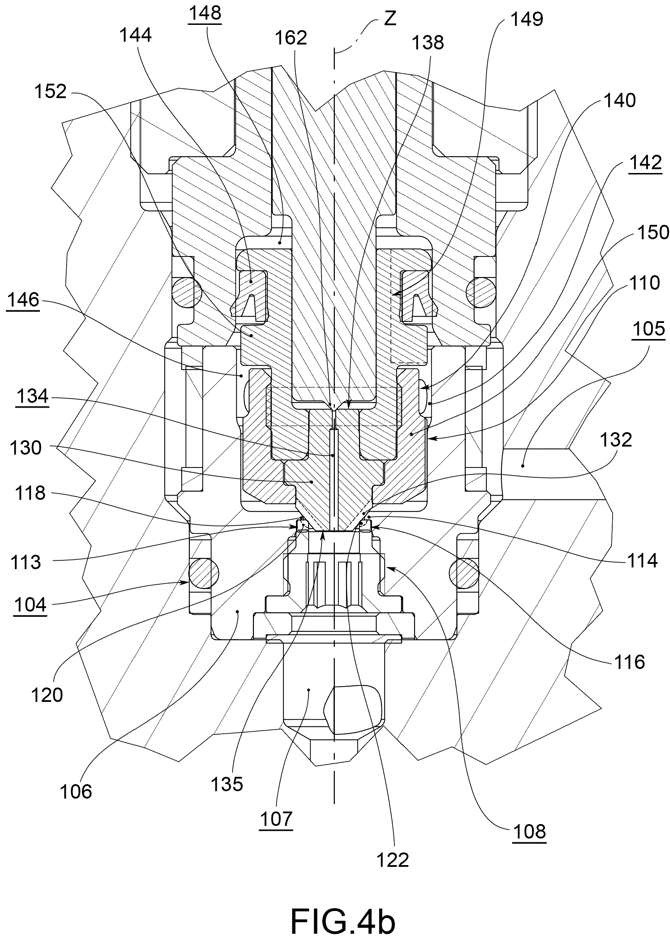

In a second operating condition of the shut-off valve 100 (Figures 4a and 4b), the shut-off valve is in a closing configuration, as in the previous condition, but it is further accepted that the gas tank is nearly empty; the gas pressure in the tank is therefore low.

Consequently, the lower region 146 of the shutter compartment 142, which is in permanent communication with the inlet channel 105 coming from the tank, is in a low-pressure condition; moreover, the upper region 148 of the shutter compartment 142, which is in permanent communication with the lower compartment 146 via the calibrated channel 149, is also in a low-pressure condition.

In this condition, there is a low-intensity action that pushes the shutter holder 140, and thus the shutter 130, against the shutter seat 113.

However, this action makes it possible to obtain an excellent seal of the shutter 130 with the shutter seat 113, insofar as a mild or zero seal is achieved between the sealing portion 132 and the upper seat 114, but an excellent seal between the sealing portion 132 and the lower seat 116, i.e., contact between the sealing portion 132, which is hard, and the lower wall 122, which is soft.

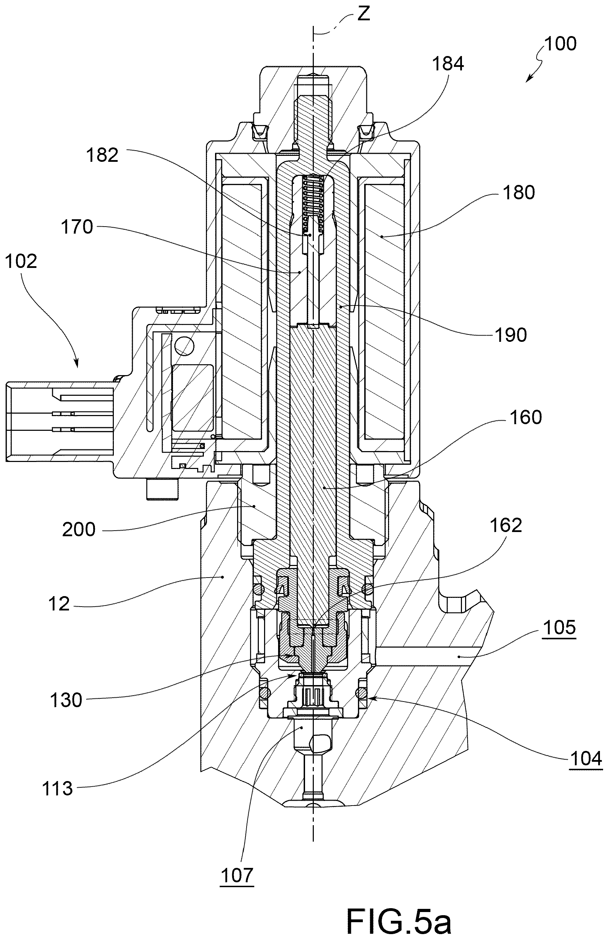

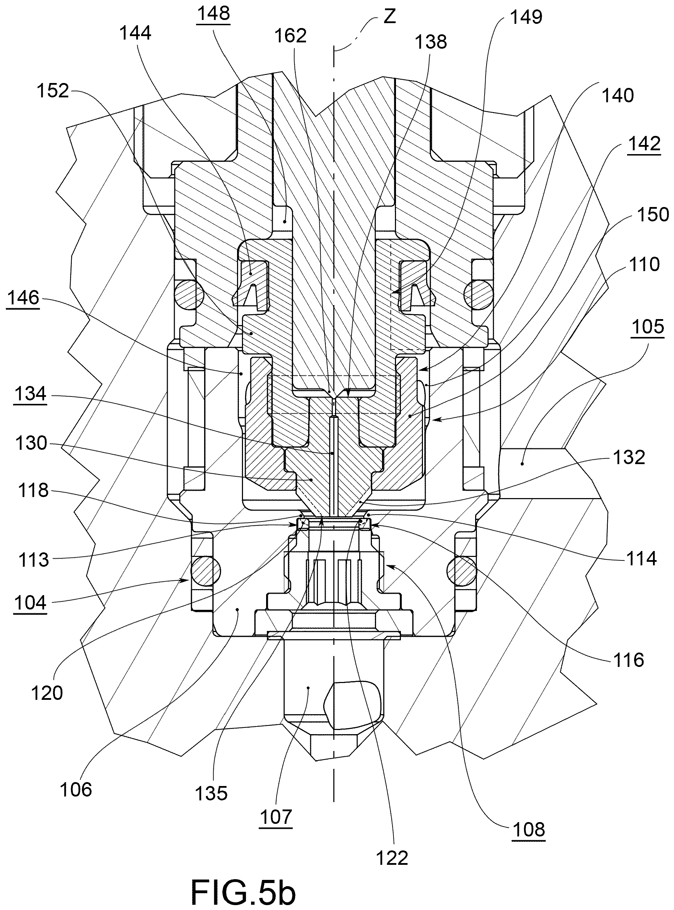

For opening the shut-off valve 100 (Figures 5a and 5b), the winding 180 is electrically powered; the movable core 160 is thus magnetically attracted by the fixed core 170, overcoming the action of the thrust means. Consequently, the movable core 160 disengages from the opening of the shutter channel 134 on the tail surface 138, opening the shutter channel 134 towards the upper region 148.

This causes an imbalance of forces that leads to the raising of the shutter holder 140 and therefore to the disengagement of the shutter 130 from the shutter seat 113. The gas coming from the inlet channel 105 thus passes through the lower region 146, the shutter seat 113, and the outlet channel 107.

The system described above forms an example embodiment of a pressure imbalance system for opening the shut-off valve.

### Second embodiment

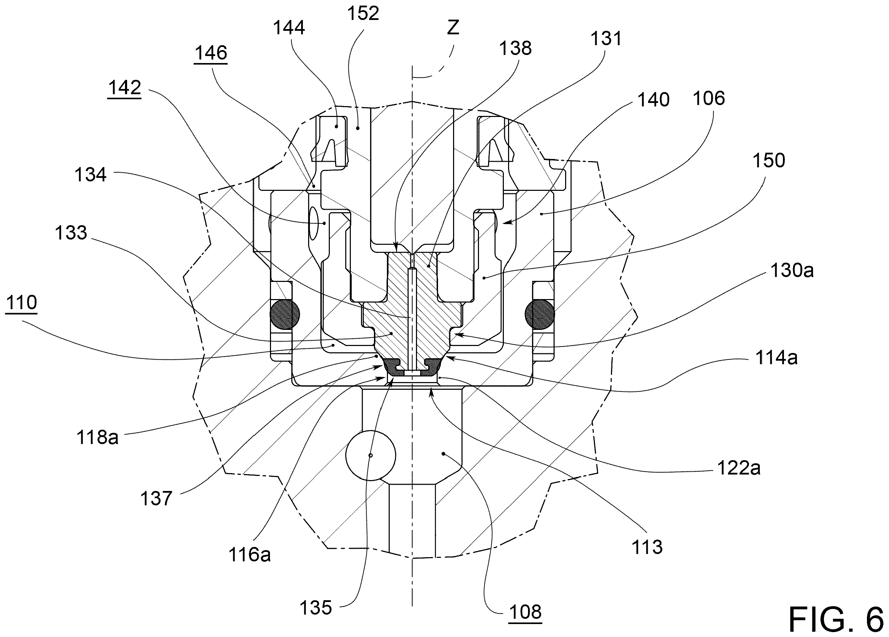

According to a second embodiment of the invention (Figures 6 to 8), the shutter seat 113 consists of an upper seat portion 114a and a lower seat portion 116a, arranged adjacent to each other.

The upper seat portion 114a has a flared passage towards the lower compartment 108, i.e., delimited by a frustoconical lateral surface converging towards the lower compartment 108, annularly delimited by an upper wall 118a, for example, in one piece with the fixed bush 106.

Similarly, the lower seat portion 116a has a cylindrical central passage, i.e., a passage annularly delimited by a lower wall 122a, for example, in one piece with the fixed bush 106.

The upper wall 118a and the lower wall 122a are made of a seat material, for example of a metal material, for example steel.

The lower seat 116a is coaxial to the upper seat 114a and the lower wall 122a is adjacent to the upper wall 118a on the side of the lower compartment 108.

The lower seat 116a makes a narrowing of the upper seat 114a.

The SOV valve 100 further comprises a shutter 130a adapted to cooperate with the shutter seat 113 in order to interrupt the fluidic communication between the lower compartment 108 and the upper compartment 110.

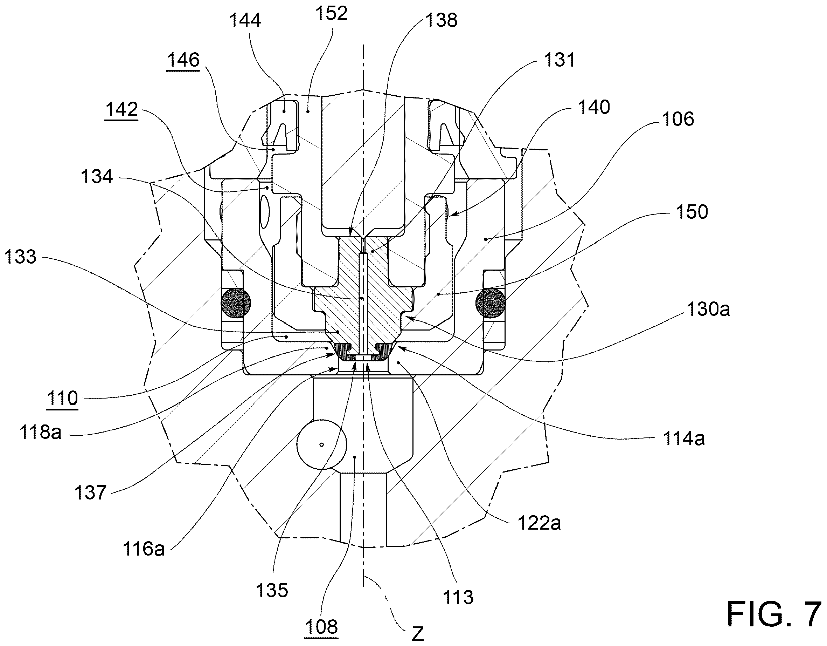

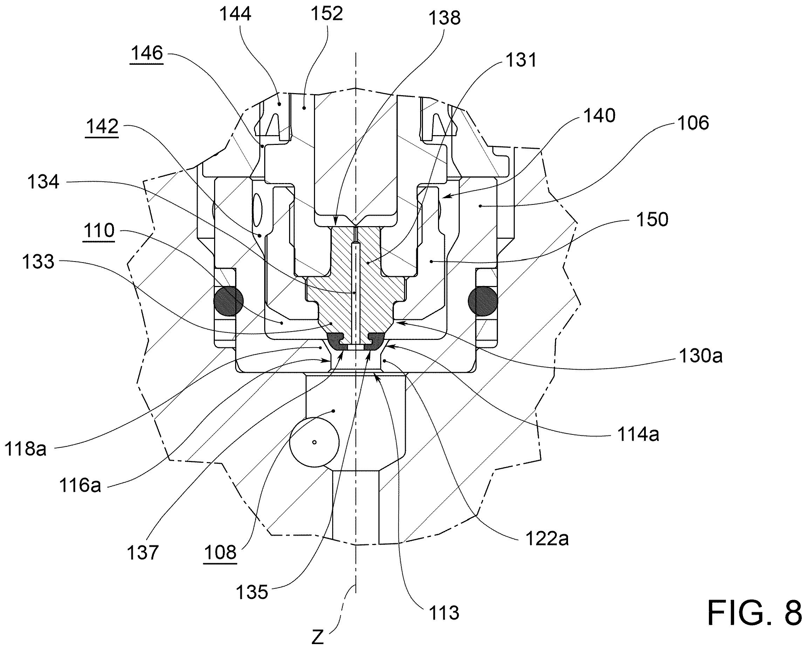

The shutter 130a is mainly located in the upper compartment 110 and is translatable along a main axis Z between an opening position, wherein it is disengaged from the shutter seat 113, so that the lower compartment 108 is in fluidic communication with the upper compartment 110 through said shutter seat 113 (Figure 8), and a closing position, wherein it is engaged with the shutter seat 113 (Figure 6 and 7).

The shutter 130a comprises a support body 131 extending mainly along said main axis Z and a first sealing portion 133, arranged at the top of the support body 131, i.e. facing the shutter seat 113.

Preferably, the first sealing portion 133 has a flared outer side surface, i.e., a frustoconical surface towards the lower compartment 108.

The first sealing portion 133 is made of a first shutter material, for example a polymer material, for example a thermoplastic material, for example PEEK (PolyEther Ether Ketone), PAI (Polyamide-Imide) or VESPEL.

Preferably, the first sealing portion is made in one piece with the support body 131, thus also being made of a first shutter material.

The shutter 130a further comprises a second sealing portion 137, arranged at the top of the first sealing portion 133, facing the shutter seat 113.

Preferably, the second sealing portion 137 has an arched outer side surface which has a convex shape towards the lower compartment 108.

The second sealing portion 137 is made of a second shutter material, for example a polymer material, having a hardness lower than the first shutter material, and is for example selected from the fluoroelastomer (FKM) family.

The second sealing portion 137 is preferably co-molded to the first sealing portion 133, i.e., to the support body 131.

The first shutter material and the second shutter material have different hardnesses. For the determination of the hardness, reference is made to the various standard standards, for example the ASTM D-785 standard for the VESPEL parts, considering, where necessary, an operating temperature of between -40°C and +85°C.

Preferably, the first shutter material is harder than the second shutter material. Preferably, moreover, the seat material is harder than the second shutter material. Preferably, finally, the seat material is harder than the first shutter material.

The shutter 130a is also provided with an axial shutter channel 134 that extends from a head surface 135 of the shutter 130a, facing towards the lower compartment 108, to a tail surface 138, axially opposite the head surface 135.

Preferably, the shutter 130a is supported by a shutter holder 140, axially sealingly translatable within a shutter compartment 142.

For example, the shutter holder 140 carries a seal 144, such as a lip seal, adapted to implement a gas seal inside the shutter compartment 142, subdividing it into a lower region 146, in communication with the inlet channel 105 and closed by the shutter 130a, and an upper region 148, at least partially delimited by said tail surface 138 of the shutter 130.

The lower region 146 is permanently in communication with the upper region 148 by means of a calibrated channel 149, having a much lesser passage cross-section than a passage cross-section of the shutter channel 134.

For example, the shutter holder 140 is in two parts: a first part 150, having a bottom axially crossed by the shutter 130 and wherefrom the first sealing portion 133 protrudes axially below, and a second part 152, screwed inside the first part 150 in order to block the shutter 130a and having a bottom crossed by the shutter 130a that surfaces above with said tail surface 138.

For example, the calibrated channel 149 is formed through the second part 152.

The shut-off valve 100 further comprises a movable core 160 in the form of an elongated stem along the main axis Z; the movable core 160 has at the lower end a protrusion 162 suitable for closing the opening of the shutter channel 134 on the tail surface 138.

The shut-off valve 100 further comprises a fixed core 170, elastic thrust means suitable for permanently operating on the movable core 160 in order to push it into the advanced position wherein it closes the shutter channel 134, and an electrically powered winding 180. For example, the thrust means comprise a peg 182, in contact with the movable core 160, and an elastic element 184 having on one side a fixed backing part acting upon the peg 182 on the other side.

Preferably, the movable core 160, the fixed core 170 and the thrust means are contained within an inner casing 190, partially contained within the body compartment 104 in order to operate on the fixed bush 106 and keep it in position, and partially protruding from the valve body 2; the winding 180 is arranged about the protruding part.

The inner casing 190 is fixed in position by means of a mounting bush 200 screwed into the body compartment 104; the mounting bush 200 in turn supports the winding 180 and the electric connector 102.

In a first operating condition of the shut-off valve 100 (Figure 6), the shut-off valve is in a closing configuration wherein the shutter 130a closes the shutter seat 113, the winding 180 is not electrically powered, the movable core 160 is distal from the fixed core 170, the thrust means push the movable core 160 against the shutter 130a such as to close the opening of the shutter channel 134 on the tail surface 138.

In such working condition, it is furthermore accepted that the gas tank is at maximum capacity or else almost full; the gas pressure in the tank is therefore high.

Consequently, the lower region 146 of the shutter compartment 142, which is in permanent communication with the inlet channel 105 coming from the tank, is in a high-pressure condition; moreover, the upper region 148 of the shutter compartment 142, which is in permanent communication with the lower compartment 146 via the calibrated channel 149, is also in a high-pressure condition.

In this condition, there is a very intense action, due to the high pressure, which pushes the shutter holder 140, and thus the shutter 130a, against the shutter seat 113.

This action makes it possible to obtain an excellent seal of the shutter 130a to be obtained with the shutter seat 113, insofar as a strong seal is achieved both between the inter first sealing portion 133 and the upper portion 114a of the shutter seat 113, i.e., contact between the first sealing portion 133 and the upper wall 118a, and between the second sealing portion 137 and the lower portion 116a, i.e., contact between the second sealing portion 137 and the lower wall 122a.

In a second operating condition of the shut-off valve 100 (Figure 7), the shut-off valve is in a closing configuration, as in the previous condition, but it is also accepted that the gas tank is nearly empty; the gas pressure in the tank is therefore low.

Consequently, the lower region 146 of the shutter compartment 142, which is in permanent communication with the inlet channel 105 coming from the tank, is in a low-pressure condition; moreover, the upper region 148 of the shutter compartment 142, which is in permanent communication with the lower compartment 146 via the calibrated channel 149, is also in a low-pressure condition.

In this condition, there is a low-intensity action that pushes the shutter holder 140, and thus the shutter 130, against the shutter seat 113.

However, this action makes it possible to obtain an excellent seal of the shutter 130a with the shutter seat 113, insofar as a mild or zero seal is achieved between the first sealing portion 133 and the upper portion 114a, but an excellent seal between the second sealing portion 137 and the lower seat 116a, i.e., contact between the second sealing portion 137, which is soft, and the lower wall 122a, which is hard.

For opening the shut-off valve 100 (Figure 8), the winding 180 is electrically powered; the movable core 160 is thus magnetically attracted by the fixed core 170, overcoming the action of the thrust means. Consequently, the movable core 160 disengages from the opening of the shutter channel 134 on the tail surface 138, opening the shutter channel 134 towards the upper region 148.

This causes an imbalance of forces that leads to the raising of the shutter holder 140 and therefore to the disengagement of the shutter 130a from the shutter seat 113. The gas coming from the inlet channel 105 thus passes through the lower region 146, the shutter seat 113, and the outlet channel 107.

The system described above forms an example embodiment of a pressure imbalance system for opening the shut-off valve.

Innovatively, the shut-off valve according to the present invention meets the needs of the industry and overcomes the drawbacks discussed above with reference to the prior art.

In effect, by virtue of the dual seal, i.e. the simultaneous sealing of the shutter on the upper seat or upper portion and on the lower seat or lower portion, the valve prevents gas leakage between the shutter and the shutter seat both under high pressure conditions in the tank and under low pressure conditions.

It is clear that a person skilled in the art may make changes to the shut-off valve described above in order to meet incidental needs, which changes all fall within the scope of protection defined in the following claims.

## Claims

1. A multifunction valve (4) for managing the flow of hydrogen in a fuel cell motor vehicle system, comprising:
- a valve body (12) provided with a body compartment (104) wherein an inlet channel (105) opens and out of which an outlet channel (107) departs;
- an electromagnetically operated shut-off valve (100) applied to the valve body (12) and operating between the inlet channel (105) and the outlet channel (107), comprising:
a) a lower compartment (108) adapted to be placed in fluidic communication with an outlet channel (107) of the multifunction valve (4) for supplying hydrogen to devices downstream of the multifunction valve;
b) an upper compartment (110) adapted to be placed in fluidic communication with an inlet channel (105) of the multifunction valve (4) for supplying hydrogen from a tank to the shut-off valve (100);
c) a shutter seat (113) to place the upper compartment (110) and the lower compartment (108) in fluidic communication, consisting of a passage annularly delimited by a lower wall made from a second material;
d) a shutter (130) translatable along a main axis (Z) and adapted to cooperate with the shutter seat (113) in order to interrupt the fluidic communication between the upper compartment (110) and the lower compartment (108), wherein said shutter (130a) comprises at least one sealing portion (133) made of a first shutter material and a second sealing portion (137) made of a second shutter material, intended to come into contact with the shutter seat (113) in order to obtain a hydrogen seal; and wherein:
- the first shutter material is harder than the second shutter material and less hard than the seat material; and
- under at least one usage condition, the first sealing portion (133) and the second sealing portion (137) of the shutter (130a) are simultaneously in contact with the shutter seat (113) in order to implement the hydrogen seal.

2. A multifunction valve according to claim 1, wherein the first shutter material is a polymer material, for example a thermoplastic material, for example PEEK (PolyEther Ether Ketone), PAI (Polyamide-Imide) or VESPEL.

3. A multifunction valve according to claims 1 or 2, wherein the second shutter material is a polymer material, for example PTFE.

4. A multifunction valve according to any one of the preceding claims, wherein the seat material is a metallic material, for example steel.

5. A multifunction valve according to any one of the preceding claims, wherein the second sealing portion (137) is co-molded to the first sealing portion (133).

6. A multifunction valve according to any one of the preceding claims, wherein the shutter (130a) comprises a support body (131), the first sealing portion (133) is at the top of the support body (131) and the second sealing portion (137) is at the top of the first sealing portion (133) .

7. A multifunction valve according to any one of the preceding claims, wherein the shutter seat (113) comprises of an upper seat portion (114a) and a lower seat portion (116a), which implements a narrowing of the upper seat portion (114a).

8. A multifunction valve according to any one of the preceding claims, comprising a pressure imbalance system for the translation of the shutter (130a) from a closing configuration of the shutoff valve to an opening configuration.

9. A multifunction valve (4) for managing the flow of hydrogen in a fuel cell motor vehicle system, comprising:
- a valve body (12) provided with a body compartment (104) wherein an inlet channel (105) opens and out of which an outlet channel (107) departs;
- an electromagnetically operated shut-off valve (100) applied to the valve body (12) and operating between the inlet channel (105) and the outlet channel (107), comprising:
a) a lower compartment (108) adapted to be placed in fluidic communication with an outlet channel (107) of the multifunction valve (4) for supplying hydrogen to devices downstream of the multifunction valve;
b) an upper compartment (110) adapted to be placed in fluidic communication with an inlet channel (105) of the multifunction valve (4) for supplying hydrogen from a tank to the shut-off valve (100);
c) a shutter seat (113) to place the upper compartment (110) and the lower compartment (108) in fluidic communication;
d) a shutter (130) translatable along a main axis (Z) and adapted to cooperate with the shutter seat (113) in order to interrupt the fluidic communication between the upper compartment (110) and the lower compartment (108), wherein said shutter (130a) comprises at least one sealing portion (133) made of a first shutter material and a second sealing portion (137) made of a second shutter material, intended to come into contact with the shutter seat (113) in order to obtain a hydrogen seal; wherein the shutter seat comprises:
i) an upper seat (114) towards the upper compartment (110), consisting of a passage annularly delimited by an upper wall (118) consisting of a metallic material, for example steel;
ii) a lower seat (116) towards the lower compartment (108), adjacent to the upper seat (114), consisting of a passage annularly delimited by a lower wall (122) consisting of a polymeric material, for example PTFE;
and wherein:
- the shutter material is harder than the material of the lower wall and less hard than the material of the upper wall; and
- under at least one usage condition, the sealing portion (132) of the shutter (130) is simultaneously in contact with the upper seat (114) and with the lower seat (116) in order to implement the hydrogen seal.
